# EUROPÄISCHE PATENTANMELDUNG

(11) **EP 3 798 749 A1**
(43) Veröffentlichungstag der Anmeldung: **31.03.2021**
(21) Anmeldenummer: 19200412.5
(22) Anmeldetag: 30.09.2019
(51) Int. Cl.: G05B 17/02

(54) **SIMULATION EINES PROZESSES EINER INDUSTRIELLEN STEUERUNGSANLAGE**

(71) Anmelder: Siemens Aktiengesellschaft, 80333 München (DE)
(72) Erfinder: Laemmle, Beat, 91183 Abenberg (DE)

(57) **Zusammenfassung**

Die Erfindung betrifft ein Verfahren zur Simulation eines Prozesses einer industriellen Steuerungsanlage wobei eine in einer echtzeitfähigen Simulationsumgebung zu bearbeitende Zeitscheibe durch die Simulationseinheit zur Bearbeitung in die echtzeitfähige Simulationsumgebung verschoben wird, sowie eine Simulationseinheit ausgebildet zur Simulation eines Prozesses einer industriellen Steuerungsanlage mit nicht-echtzeitfähige Simulationsumgebung und echtzeitfähiger Simulationsumgebung und einem gemeinsamen Speicherbereich mit Zugriff durch die nicht-echtzeitfähige Simulationsumgebung sowie durch die echtzeitfähige Simulationsumgebung.

## Beschreibung

Die Erfindung betrifft ein Verfahren zur Simulation eines Prozesses einer industriellen Steuerungsanlage sowie eine Simulationseinheit ausgebildet zur Simulation eines Prozesses einer industriellen Steuerungsanlage.

Zunehmend werden industrielle Anlagen wie beispielsweise automatisierte Anlagen in der Prozessindustrie oder in der Fertigungsindustrie virtuell in Betrieb genommen oder die Inbetriebnahme zumindest in Teilen mittels einer virtuellen Inbetriebnahme unterstützt. Dabei kommt es vor, dass einzelne Anlagenteile, beispielsweise ein Antrieb einer Walze, nicht simuliert werden können, weil keine entsprechende Simulations-Software zur Simulation des Teils verfügbar ist. Solche Anlagenteile werden dann üblicherweise durch reale Systeme abgebildet.

Da für die Simulation des Gesamtsystems sowohl einzelne Simulationen einzelner Anlagenteile als auch die Daten eines nicht simulierten Anlagenteils gemeinsam eingehen müssen, müssen sich die Simulationen der verschiedenen Anlagenteile in Hinblick auf die für die Simulation zur Verfügung stehende Zeit nach dem realen System, d.h. dem in real ablaufenden Anlagenteil, richten. Das bedeutet, dass alle Teile der Simulation, welche für den Datenaustausch mit dem nicht simulierten, real ablaufenden Teil zusammenwirken, in Echtzeit, auch Realtime genannt, simuliert werden müssen.

Bislang können Systeme, sobald einzelne Teilmodelle des Systems in Echtzeit simuliert werden müssen, nur insgesamt in Echtzeit simuliert werden. D.h. dass bislang eine binäre Entscheidung getroffen werden muss, entweder eine gesamte Anlage in Echtzeit zu simulieren oder insgesamt ohne Echtzeit-Anforderung auszukommen.

Oftmals ist es jedoch, insbesondere bei einer virtuellen Inbetriebnahme, nicht nötig, die gesamte Anlage in Echtzeit zu simulieren, nur weil einzelne Teilsimulationen aufgrund der Einbeziehung eines realen Signalverarbeitungsvorganges in der Anlage in Echtzeit simuliert werden müssen.

Vor diesem Hintergrund ist es eine Aufgabe der vorliegenden Erfindung, eine Simulation mit mindestens einer Echtzeit-Anforderungen unterliegenden Teilsimulationen zu verbessern.

Diese Aufgabe wird durch den Gegenstand der unabhängigen Ansprüche gelöst. Vorteilhafte Ausgestaltungen sind in den abhängigen Ansprüchen angegeben.

Die Erfindung betrifft ein computerimplementiertes Verfahren zur Simulation eines Prozesses einer industriellen Steuerungsanlage in einer Simulationseinheit, wobei die Simulationseinheit eine echtzeitfähige Simulationsumgebung und eine nicht-echtzeitfähige Simulationsumgebung aufweist, welche über einen gemeinsamen Speicherbereich Daten austauschen können, wobei der zu simulierende Prozess in mindestens zwei Zeitscheiben unterteilt ist, wobei mindestens eine der mindestens zwei Zeitscheiben als in der echtzeitfähigen Simulationsumgebung durch die Simulation zu bearbeiten festgelegt ist, wobei die mindestens eine in der echtzeitfähigen Simulationsumgebung zu bearbeitende Zeitscheibe durch die Simulationseinheit zur Bearbeitung in die echtzeitfähige Simulationsumgebung verschoben wird, wobei ein Simulationsergebnis der Simulation bereitgestellt wird zur Übertragung an eine datenverarbeitende Einheit, insbesondere eine Steuerungseinheit der industriellen Steuerungsanlage und/oder eine weitere Simulationsumgebung der industriellen Steuerungsanlage und/oder einen Industrie-PC oder HMI-Gerät zur Überwachung der industriellen Steuerungsanlage, insbesondere zur Überwachung einer virtuellen Inbetriebnahme der industriellen Steuerungsanlage.

Für die Durchführung computerimplementierter Verfahren zur Simulation von Prozessen wird der Prozess bekannterweise modelliert. Der in einer industriellen Steuerungsanlage ablaufende Prozess, beispielsweise bestehend aus mehreren Prozessschritten, welche teilweise nacheinander und teilweise parallel ablaufen, wird dabei durch ein Modell, bestehend aus Teilmodellen, abgebildet. Je nach Komplexität eines zu simulierenden Prozesses ist ein Teilmodell unterschiedlich umfangreich und eine Simulation des Teilprozesses benötigt entsprechend unterschiedlich viel Ressourcen und/oder Zeit zur Simulation.

Eine Simulationseinheit stellt gemäß der vorliegenden Anmeldung die Hardware und Software zur Verfügung, welche für das Ausführen der Simulation sowie das Ausgeben eines Simulationsergebnisses nötig sind. Die Simulationseinheit stellt eine echtzeitfähige Simulationsumgebung zur Verfügung sowie eine nicht-echtzeitfähige, auch non-realtime genannt, Simulationsumgebung. Beide Simulationsumgebungen können über einen gemeinsamen Speicherbereich, der ebenfalls Bestandteil der Simulationseinheit ist, Daten austauschen.

Beide Simulationsumgebungen können sogenannte Zeitscheiben, auch Timeslices genannt, verarbeiten.

Die Bearbeitung einer Zeitscheibe durch die Simulationsumgebung bedeutet dabei, dass ein bestimmter Teilprozess, der durch ein zugehöriges Teilmodell modelliert ist und der Zeitscheibe zugeordnet ist, in dieser Zeitscheibe simuliert wird. Für eine Zeitscheibe ist dabei festlegbar, wie schnell eine Berechnung des in der Zeitscheibe zu bearbeitenden Teilmodells ablaufen soll. Aus einem Gesamtmodell ist beispielsweise zu ermitteln, welches Teilmodell wie schnell gerechnet werden muss, und entsprechend werden die Zeitscheiben zugeordnet. Anders formuliert wird je Zeitscheibe eine Zykluszeit vorgegeben, die festlegt, nach welcher Zeit, nämlich der Zykluszeit, die Berechnung der Simulation in der Zeitscheibe abgeschlossen sein sollte.

Die beiden Simulationsumgebung können auf den gemeinsamen Speicherbereich zugreifen, so dass aus in der echtzeitfähigen Simulationsumgebung ablaufenden Zeitscheiben erstellte Daten durch das auf der nicht-echtzeitfähigen Simulationsumgebung ablaufende Simulationsprogramm verarbeitet werden können und andersherum aus in der nicht-echtzeitfähigen Simulationsumgebung ablaufenden Zeitscheiben erstellte Daten durch das auf der echtzeitfähigen Simulationsumgebung ablaufende Simulationsprogramm verarbeitet werden können.

Dabei greifen die jeweiligen Simulationen im jeweiligen Zyklus auf die Daten aus dem Speicherbereich zu. Also der Echtzeit-Teil in einem vorgebbaren Takt. Der Non-Realtime-Teil immer dann, wenn für alle synchronisierten Simulationen ein Zyklus vorbei ist.

Beispielsweise werden bis zu acht verschiedene Zeitscheiben oder mehr für eine Simulation unterstützt. Die Teilmodelle werden den Zeitscheiben insbesondere derart zugeordnet, dass die Simulation insgesamt möglichst zeitoptimiert ausgeführt wird.

Die nicht-echtzeitfähige Simulationsumgebung kann beispielsweise als Ablaufumgebung mit einem Betriebssystem wie Microsoft Windows ® ausgebildet sein, die echtzeitfähige Simulationsumgebungen kann beispielsweise mit einem Linux-basierten System wie Mentor LINUX+RT ausgestattet sein.

Das Verschieben der in der echtzeitfähigen Simulationsumgebung zu bearbeitenden Zeitscheibe wird durch die nicht-echtzeitfähigen Simulationsumgebung angestoßen. Getriggert wird das Verschieben durch eine zu der zu verschiebenden Zeitscheibe hinterlegten Information, welche insbesondere in der Engineering-Phase beim Aufbau der Simulation festgelegt wird. Die in der Zeitscheibe mit der vorgegebenen Zykluszeit zu simulierenden Modelldaten geben somit vorteilhafterweise selbst keinen Hinweis auf die Echtzeitanforderung und können somit insbesondere unabhängig von durch Echtzeitanforderungen entstehende Restriktionen erstellt werden. Die Zuordnung der Zeitscheibe erfolgt beispielsweise über eine Hinterlegung einer Information zu einer jeweiligen Zeitscheibe als in Echtzeit oder nicht in Echtzeit zu bearbeitende Zeitscheibe. Vorteilhafterweise wird die Information in der nicht-echtzeitfähigen Simulationsumgebung hinterlegt.

Auf vorteilhafte Weise ermöglicht das vorgeschlagene Verfahren die Nutzung eines einmalig erstellten Simulationsmodelles sowohl bei bestehenden Echtzeit-Anforderungen als auch in Nichtechtzeit-Szenarien. Insbesondere müssen erstellte Modelle, für die beispielsweise zum Zeitpunkt der Modellgenerierung unklar ist, ob sie später unter Echtzeit-Bedingungen simuliert werden müssen oder ob nicht-Echtzeit-Bearbeitung ausreichend ist, nicht nachträglich verändert werden. Ein nachträgliches Vereinfachen des Modells kann bei herkömmlichen Simulationsverfahren notwendig sein, wenn sich herausstellt, dass Echtzeit-Anforderungen insgesamt für die gesamte Simulation eingehalten werden müssen. In solchen Fällen kann ein verfügbares, komplexes Modell des Prozesses bislang nicht genutzt werden, weil aufgrund der Echtzeit-Anforderung einzelner Teilmodelle das gesamte Modell in Echtzeit gerechnet wird.

Mit dem hier vorgeschlagenen Verfahren werden nur die Teilmodelle in Echtzeit gerechnet, die aufgrund der Einbindung realer Komponenten Echtzeit benötigen. Die Teilmodelle selbst "wissen" dabei nicht, ob sie in Echtzeit ablaufen oder nicht.

Auf vorteilhafte Weise wird die in der Echtzeit-Umgebung verfügbare Rechenkapazität nur für die Teilsimulationen vorbehalten, die tatsächlich Echtzeit-Anforderungen genügen müssen. Auf vorteilhafte Weise können einzelne Teilmodelle und damit auch ein Gesamtsimulationsmodell komplexer werden, ohne dass dafür insgesamt eine größere Rechenleistung bereitgestellt werden müsste.

Ein paralleles Pflegen mehrerer Simulationsmodelle, um beispielsweise eine spätere Simulation unter Echtzeitbedingen mit einem vereinfachten Modell durchführen zu können oder den gleichen Teilprozess bei nicht erforderlicher Echtzeitberechnung mit einem komplexeren Modell simulieren zu können, entfällt auf vorteilhafte Weise.

Ferner ist eine Änderung der Zuordnung von Zeitscheiben zur Echtzeit- oder nicht-Echtzeit-Umgebung durch einen Anwender flexibel jederzeit möglich. Vorteilhafterweise muss dafür das Modell nicht verändert werden. Eine Veränderung des Modells kann jedoch aus anderen Gründen wie Änderungen an der Anlage, Fehlerbehebung oder ähnliches, dennoch sinnvoll sein.

Ein für die Gesamtsimulation unnötiges Simulieren des gesamten Modells in Echtzeit bei einer erforderlichen Teilsimulation in Echtzeit entfällt ebenfalls auf vorteilhafte Weise. Somit muss keine unnötig hohe Rechenkapazität bereitgestellt werden.

Das Simulationsergebnis der Simulation wird bereitgestellt zur Übertragung an eine datenverarbeitende Einheit. Das Simulationsergebnis wird beispielsweise an die datenverarbeitende Einheit geschickt. Dabei wird beispielsweise eine Kopplungsschnittstelle, beispielsweise über ein Industrienetzwerk, genutzt.

Das Simulationsergebnis kann Werte enthalten, die zur Weiterverarbeitung in einer weiteren Simulation verwendet werden können. Somit kann die Simulation mit weiteren Simulationen gekoppelt werden. Eine weitere Simulation verwendet beispielsweise einen Sollwert, der aus der Simulation erzeugt wurde.

Ebenso kann das Simulationsergebnis an eine Steuerungseinheit der industriellen Steuerungsanlage geschickt werden. Beispielsweise soll ein Steuerungsverfahren mit einer realen Steuerung, beispielsweise einer realen PLC, getestet werden, wobei einzelne Verfahrensschritte simuliert werden. Beispielsweise ist eine fertig getestet Fremdsteuerung einer Anlage im Einsatz, für die kein Simulationsmodell vorliegt. Somit muss nicht die gesamte Anlage simuliert werden und man spielt der Fremdsteuerung mittels teilweiser Simulation vor, dass sie einen realen Prozess vor sich hat. Zeitkritische Informationen, wie insbesondere Lebenszeichen, werden der Fremdsteuerung in Echtzeit bereitgestellt. Nicht zeitkritische Informationen werden verzögert bereitgestellt. Die Fremdsteuerung läuft zwar in Echtzeit, es muss jedoch nicht die gesamte Simulation in Echtzeit laufen.

Beispielsweise treibt eine Steuerung einen Motor an. Am Motor ist ein Geber verbaut, welcher der Steuerung meldet, wie weit der Motor gedreht hat, also die Position. In Echtzeit muss der Steuerung nur die Information gegeben werden, dass sowohl Motor als auch Geber überhaupt erreichbar sind. Die Position hingegen kann mehr oder minder verzögert übertragen werden, da aus Sicht der Steuerung ohnehin aufgrund von externen Bedingungen, wie beispielsweise Fett in Lagern, Reibung durch zu wenig Öl etc., nicht davon ausgegangen werden kann, dass der Motor immer genau gleich reagieren wird. Die Lebenszeichen werden somit vorteilhafterweise in Echtzeit simuliert, die Positionsbestimmung in Non-Realtime.

Ebenso kann das Simulationsergebnis an einen Industrie-PC zur Überwachung einer virtuellen Inbetriebnahme gesendet werden. Das Simulationsergebnis kann in diesem Fall aus einer Information über den Erfolg einer Inbetriebnahme bestehen. Dabei kann eine Auswertung des Simulationsergebnisses bereits auf der Simulationseinheit selbst oder auf dem Industrie-PC erfolgen. Der Industrie-PC kann auch als HMI-Gerät ausgebildet sein. Beispielsweise wird aus dem Simulationsergebnis eine virtualisierte Anlage graphisch abgebildet, bei der Prozessabläufe oder Prozess-Fortschritte oder Wertebereiche simulierter Werte graphisch angezeigt werden. Beispielsweise werden Indikatoren wie Ampelanzeigen verwendet, die anzeigen, wie kritisch oder unkritisch einzelne Prozessschritte gemäß dem Simulationsergebnis verlaufen.

Gemäß einer Ausgestaltung wird das Simulationsergebnis aus in der echtzeitfähigen Simulationsumgebung und in der nicht-echtzeitfähigen Simulationsumgebung bearbeiteten Anteilen zusammengesetzt. Der gemeinsame Speicherbereich zum Austausch der Daten zwischen echtzeitfähiger und nicht-echtzeitfähiger Simulationsumgebung ermöglicht es der Simulationseinheit, ein Simulationsergebnis an die datenverarbeitende Einheit auszugeben, welches Daten aus in der nicht-echtzeitfähigen Simulationsumgebung berechneten Zeitscheiben sowie Daten aus in der echtzeitfähigen Simulationsumgebung gerechneten Zeitscheiben umfasst. Dabei können Daten aus der echt-zeitfähigen Simulation in den Simulationsprozess der nicht-echtzeitfähigen Simulationsumgebung eingehen oder andersherum.

Beispielsweise wird bei Integration einer realen CPU in eine Simulation im Echtzeit-Teil eine Solldrehzahl ermittelt und an den nicht-Echtzeit-Teil übergeben. Diese Solldrehzahl wird sich potenziell häufiger ändern, als der nicht-Echtzeit-Teil sie ausliest. Anders herum kann der nicht-Echtzeit-Teil eine simulierte Ist-Drehzahl errechnen, die dann an den Echtzeit-Teil übergeben wird. Der Echtzeit-Teil wird dann evtl. häufiger den gleichen Wert lesen, weil der aktuelle Wert noch nicht bereitsteht. Für die Steuerung wirkt der simulierte Motor dann einfach träger, aber immer erreichbar.

Gemäß einer Ausgestaltung werden die echtzeitfähige Simulationsumgebung und die nicht-echtzeitfähige Simulationsumgebung auf einer Recheneinheit der Simulationseinheit ausgeführt und Ressourcen der Recheneinheit werden mittels eines Hypervisors auf die echtzeitfähige Simulationsumgebung und die nicht-echtzeitfähige Simulationsumgebung aufgeteilt. Der Hypervisor verwaltet dabei die Ressourcen-Zuteilung für die zwei Systeme. Der Hypervisor verteilt beispielsweise Hardware-Ressourcen derart, dass für die beiden jeweiligen Betriebssysteme alle Ressourcen bei Bedarf verfügbar sind als ob nur ein Betriebssystem vorhanden wäre. Dies kann beispielsweise durch Hardware-Emulation oder Hardware-Virtualisierung stattfinden. Die beiden Simulationsumgebungen laufen insbesondere als sogenannte virtuelle Maschine auf der Hardware-Umgebung der Simulationseinheit.

Gemäß einer Ausgestaltung wird die Simulation des Prozesses durch ein in mindestens zwei Teilmodelle unterteiltes Simulationsmodell abgebildet und die mindestens zwei Teilmodelle werden in jeweils einer der mindestens zwei Zeitscheiben durch die Simulationseinheit bearbeitet. Ein Teilmodell läuft in einer Zeitscheibe. Das Gesamtmodell wird somit auf insgesamt verfügbare Zeitscheiben verteilt. In einer Variante können in einer Zeitscheibe auch mehrere Sub-Teilmodelle laufen. Die Sub-Teilmodelle werden dann beispielsweise auf mehrere Prozessorkerne verteilt.

Gemäß einer Ausgestaltung bleiben die mindestens zwei Teilmodelle durch das Festlegen der zugehörigen Zeitscheibe als in der echtzeitfähigen Simulationsumgebung zu bearbeitende Zeitscheibe unbeeinflusst. Insbesondere werden keine Modelldaten geändert oder angepasst. Lediglich die Zeitscheibe ist durch das Managementsystem der Simulationseinheit mittels einer Information über die vorgesehene Simulationsumgebung zuordenbar und weiß dann, welches Modell auszuführen ist.

Gemäß einer Ausgestaltung bleiben die mindestens zwei Teilmodelle durch das Verschieben der zugehörigen Zeitscheibe in die echtzeitfähige Simulationsumgebung unbeeinflusst. Auch während der laufenden Simulation bleibt das abzuarbeitende Simulationsmodell demnach unverändert. Aus Sicht des Simulationsmodells ändert sich lediglich das Betriebssystem, welches dem ablaufenden Simulationsprogramm zugrunde liegt.

Gemäß einer Ausgestaltung synchronisiert die nicht-echtzeitfähige Simulationsumgebung als Managementsystem der Simulationseinheit in verschiedenen Zeitscheiben erstellte Teilsimulationen. Insbesondere werden mehrere in der nicht-echtzeitfähigen Simulationsumgebung ablaufende Zeitscheiben synchronisiert. Typischerweise werden auf der nicht-echtzeitfähigen Simulationsumgebung mehrere Zeitscheiben gleichzeitig ablaufen. Die Synchronisation dieser Zeitscheiben erfolgt über die Zyklen, d.h. wenn für alle synchronisierten Simulationen der jeweilige Zyklus vorbei ist.

Auch innerhalb der echtzeitfähigen Simulationsumgebung können mehrere Zeitscheiben parallel ablaufen und untereinander mittels gemeinsamer Speicherbereiche Daten austauschen. Hier erfolgt ebenfalls eine Synchronisation der Simulationen, insbesondere durch das Managementsystem in der echtzeitfähigen Simulationsumgebung oder - ermöglicht durch die in Echtzeit ablaufende Simulation - über die Zeit.

Gemäß einer Ausgestaltung führt eine zwischen der Simulationseinheit und der datenverarbeitenden Einheit vorgesehene Kopplungsschnittstelle einen Signalaustausch zwischen Simulationseinheit und datenverarbeitender Einheit durch.

Die Erfindung betrifft ferner ein computerimplementiertes Verfahren zum Einrichten einer Simulation eines Prozesses in einer industriellen Steuerungsanlage, wobei das Einrichten in einem Engineeringprogramm der Simulationseinheit erfolgt, wobei die Simulation eine echtzeitfähige Simulationsumgebung und eine nicht-echtzeitfähige Simulationsumgebung aufweist, welche über einen gemeinsamen Speicherbereich Daten austauschen können, wobei mindestens zwei Zeitscheiben des zu simulierenden Prozesses festgelegt werden, wobei für mindestens eine der mindestens zwei Zeitscheiben wählbar festgelegt wird, ob sie durch die Simulation in der echtzeitfähigen Simulationsumgebung oder der nicht-echtzeitfähigen Simulationsumgebung bearbeitet wird.

Das passende Engineering bietet die Grundlage für eine spätere flexible Simulation mit Anteilen in einer nicht-echtzeitfähigen Simulationsumgebung und Anteilen in einer echtzeitfähigen Simulationsumgebung. Hier wird festgelegt, welche und wie viele Zeitscheiben in welcher Umgebung ablaufen sollen. Der Schritt des Zuordnens erfolgt vorteilhafterweise somit ohne einen Eingriff in eine laufende Simulation, da die Informationen für ein Managementsystem der Simulationseinheit bereits verfügbar sind.

Gemäß einer Ausgestaltung umfasst das Einrichten ferner das Zuweisen von mindestens zwei Teilmodellen eines Simulationsmodells des Prozesses, wobei jedes der mindestens zwei Teilmodelle zu jeweils einer der mindestens zwei Zeitscheiben oder mehreren Zeitscheiben innerhalb der echtzeitfähigen oder der nicht-echtzeitfähigen Simulationsumgebungen zugeordnet wird.

Die Erfindung betrifft ferner ein Computerprogrammprodukt mit einem Computerprogramm, das Mittel zur Durchführung des computerimplementierten Verfahrens nach einem der vorstehend beschriebenen Ausführungsformen aufweist, wenn das Computerprogramm auf einer programmgesteuerten Einrichtung zur Ausführung gebracht wird.

Die Erfindung betrifft ferner eine Simulationseinheit ausgebildet zur Simulation eines Prozesses einer industriellen Steuerungsanlage, aufweisend:
- eine nicht-echtzeitfähige Simulationsumgebung und eine echtzeitfähige Simulationsumgebung,
- einen gemeinsamen Speicherbereich mit Zugriff durch die nicht-echtzeitfähige Simulationsumgebung sowie durch die echtzeitfähige Simulationsumgebung,
- eine Kopplungsschnittstelle zu einer datenverarbeitenden Einheit, insbesondere eine Steuerungseinheit der industriellen Steuerungsanlage und/oder eine weitere Simulationsumgebung der industriellen Steuerungsanlage und/oder einen Industrie-PC oder ein HMI-Gerät zur Überwachung der industriellen Steuerungsanlage, insbesondere zur Überwachung einer virtuellen Inbetriebnahme der industriellen Steuerungsanlage.

Die jeweilige Einheit, Simulationseinheit und datenverarbeitenden Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausgestaltung ist die Simulationseinheit ferner geeignet zum Ausführen des vorstehend beschriebenen Computerprogrammproduktes.

Die Erfindung wird nachfolgend anhand von Ausführungsbeispielen mit Hilfe der Figuren näher erläutert. Es zeigen:
Figur 1: eine schematische Abbildung einer Simulationseinheit mit angeschlossener Steuerungseinheit und angeschlossenem Industrie-PC gemäß einem ersten Ausführungsbeispiel der Erfindung;
Figur 2A-2B: eine schematische Abbildung einer Simulationseinheit zur Veranschaulichung von in zwei Simulationsumgebung ablaufenden Teilsimulationen;
Figur 3: eine schematische Abbildung einer Simulationseinheit mit angeschlossener weiterer Simulationseinheit gemäß einem zweiten Ausführungsbeispiel der Erfindung.

In den Figuren sind funktionsgleiche Elemente mit denselben Bezugszeichen versehen, sofern nichts anderes angegeben ist.

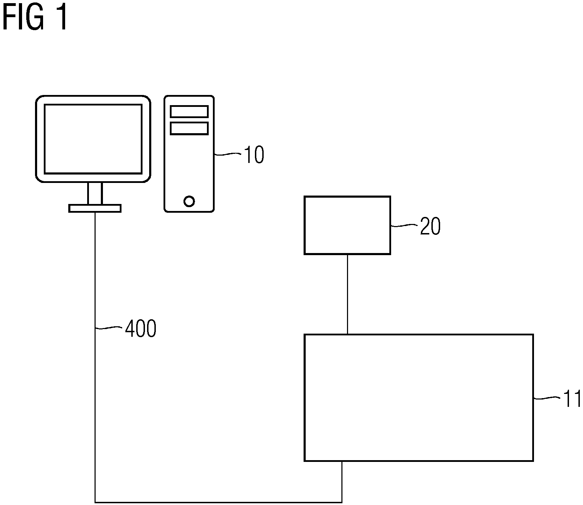

Figur 1 zeigt schematisch, wie eine Simulationseinheit 11 einerseits mit einem Industrie-PC 10 als datenverarbeitende Einheit und andererseits mit einer Steuerungseinheit 20 verbunden ist. Die Steuerungseinheit 20 ist dabei eine Komponente einer industriellen Steuerungsanlage. Die industrielle Steuerungsanlage soll virtuell in Betrieb genommen werden. Für die Steuerungseinheit 20 ist gemäß einem ersten Ausführungsbeispiel der Erfindung kein Simulationsmodell vorhanden.

Beispielsweise wird eine Fremdsteuerung in einer Steuerungsanlage eines anderen Anbieters eingesetzt. Beispielsweise steuert die Steuerungseinheit einen Antrieb, der einen Motor zur Bewegung einer Achse in der Anlage antreibt. Da die Steuerungseinheit 20 real verbaut ist, müssen die Anteile der Simulationen, die einen Input für die Steuerungseinheit 20 liefern, in Echtzeit simuliert werden. Beispielsweise wird gemäß dem ersten Ausführungsbeispiel der Erfindung der Antrieb teilweise in Echtzeit simuliert.

Für die Steuerungseinheit 20 sind bestimmte Daten des Antriebs in Echtzeit erforderlich, damit die Steuerungseinheit den Antrieb als fehlerfrei funktionierend akzeptiert. Insbesondere fragt die Steuerungseinheit 20 sogenannte Lebenszeichen ab, welche sicherstellen, dass eine Reaktion des Antriebs rechtzeitig erfolgt. Der Antrieb soll somit eine dedizierte Antwortzeit, welche er einhalten kann, nachweisen. Dafür ist es nicht nötig, dass der Antrieb vollständig in Echtzeit simuliert wird, beispielsweise inklusive am Antrieb verbauter Geber. Das Verhalten einer Achse des Antriebs kann somit vorteilhafter Weise unter nicht-Echtzeitbedingungen simuliert werden.

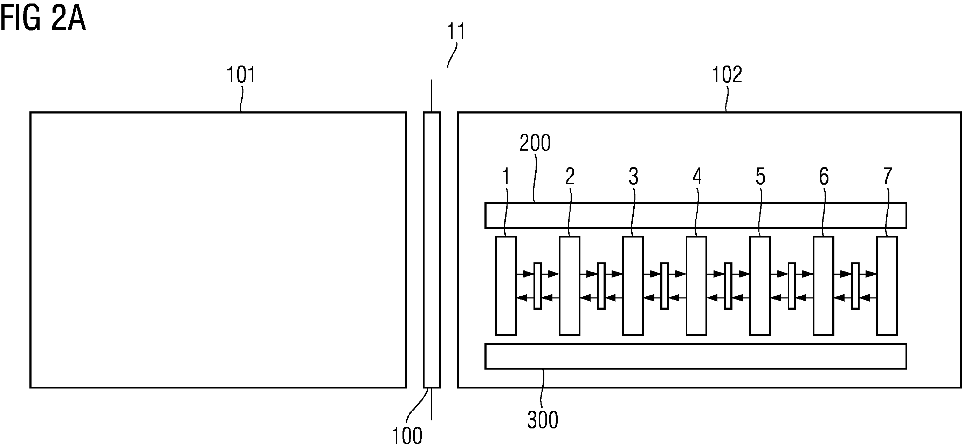

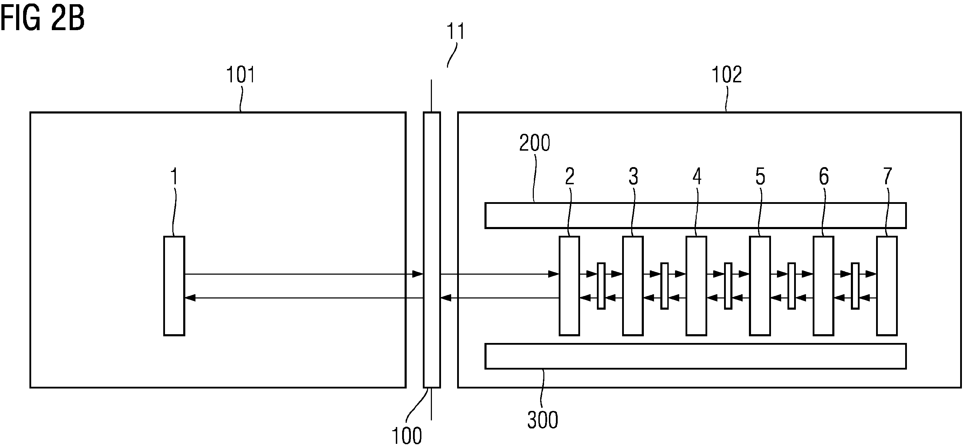

Eine solche beschriebene Aufteilung der Teilsimulationen, beispielsweise der Simulation der Reaktionszeit oder Antwortzeit des Antriebs und der Simulation des Gebers des Antriebs, kann derart realisiert werden, dass die verschiedenen Teilsimulationen in verschiedenen Zeitscheibe oder Timeslices gerechnet werden. Dieses Vorgehen ist in den Figuren 2A und 2B veranschaulicht. Eine Zeitscheibe 1 von mehreren Zeitscheiben 1-7 ist in der Figur 2A zur Berechnung der Bericht Echtzeitsimulation 102 vorgesehen. Soll nun in der Zeitscheibe 1 eine Echtzeitsimulation erfolgen, wird diese innerhalb der Simulationseinheit 11 in eine extra für Echtzeit Anforderungen ausgebildete Simulationsumgebung 101 verschoben. Diese ist mit der nicht-echtzeitfähigen Simulationsumgebung 102 der Simulationseinheit 11 über einen gemeinsamen Speicherbereich 100 verbunden.

Ein Managementsystem 200 der nicht echtzeitfähigen Simulationsumgebung 102 ist etwa für ein Starten und Stoppen der Simulationen und für ein Synchronisieren der verschiedenen Timeslices zuständig. Ferner ist ein Protokollsystem zur Archivierung oder zum Logging von Vorgängen auf der Simulationseinheit 11 zuständig. Beispielsweise erstellt das Protokollsystem 300 Snapshot der Simulationsvorgänge oder protokolliert gesendete und empfangene Nachrichten.

Für das beschriebene erste Ausführungsbeispiel der Erfindung ist es von Vorteil, dass beispielsweise ein in der Anlage vorhandenes Modell des Antriebs, welches für eine nicht echtzeitfähige Simulation ausgelegt war, eine Anpassung auch für die vorgeschlagene Teilsimulation in Echtzeit verwendet werden kann. Beispielsweise kann der Antrieb zum Zeitpunkt der Modellierung über eine modellierte Steuerungseinheit angesteuert worden sein. Entsprechend konnte der Antrieb durch ein aufwändiges Modell abgebildet werden. Durch das Einsetzen der Fremdsteuerung wird zumindest teilweise eine Simulation in Echtzeit nötig.

Während herkömmlicher Weise die gesamte Anlage oder zumindest der gesamte Antrieb in Echtzeit hätte simuliert werden müssen, bietet das vorgeschlagene Verfahren den Vorteil, dass nur so wenig wie möglich in Echtzeit simuliert werden muss, sodass die gesamte Simulation größtenteils weiterhin in nicht Echtzeit erfolgen kann. Somit kann vorteilhafter Weise das komplexe Modell weiterverwendet werden, ohne dass allzu hohe Anforderungen an die Rechenkapazität der Simulationseinheit gestellt werden müssen.

Das Simulationsergebnis, welches sich aus der gesamten Simulation der Simulationseinheit 11 ergibt, wird beispielsweise mittels einer Netzwerkverbindung 400 an einen Industrie PC 10 weitergeleitet. An diesem steht beispielsweise ein grafisches Tool zur Verfügung, welches das Simulationsergebnis aufbereitet für eine Überprüfung durch einen Nutzer. Somit kann festgestellt werden, ob eine real geplante Inbetriebnahme ohne erwartbaren Fehler ablaufen wird. Insbesondere für virtuelle Inbetriebnahme ist in der Regel keine insgesamt echtzeitfähige Simulation nötig, sodass das vorgeschlagene Verfahren hier auf besonders vorteilhafte Weise eingesetzt werden kann.

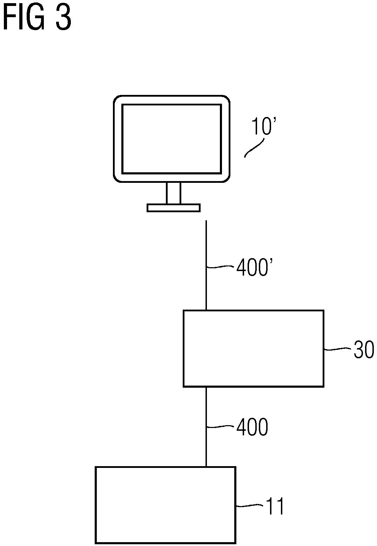

Gemäß einem zweiten Ausführungsbeispiel der Erfindung, welches in Figur 3 veranschaulicht ist, steht Simulationseinheit 11 über eine Netzwerkverbindung 400 im Austausch mit einer weiteren Simulationseinheit 30. Beispielsweise handelt es sich um auf unterschiedlichen Simulationsmechanismen basierende Simulationen, welche nicht in einer gemeinsamen Ablaufumgebung gerechnet werden. Beispielsweise soll zu Zwecken der Qualitätsüberwachung während des Betriebs einer Pressenanlage das fehlerfreie Funktionieren eines Stoppvorganges überprüft werden.

Beispielsweise ist ein Transfer in einer Pressenlinie verbaut, für welchen kein Modell vorhanden ist. Das Verhalten des Transfers kann somit nicht simuliert werden und es ist ein Zusammenspiel einer simulierten Steuerung mit einem realen Transfer nötig.

Da für die korrekte Funktionsweise eines Pressenstopps auch das zeitliche Zusammenwirken der Reaktionen verschiedener Komponenten von Interesse ist, müssen beispielsweise aufgrund des real verbauten und damit in Echtzeit reagierenden Transfers auch Bewegungsvorgänge beispielsweise des Stößels einer Presse in Echtzeit simuliert werden. Es soll insbesondere sichergestellt werden, dass unter Berücksichtigung der unterschiedlichen Trägheiten der beteiligten Komponenten ein Stoppvorgang möglichst ohne Schaden an den Komponenten erfolgt. Zugleich müssen parallel ablaufende Vorgänge, beispielsweise eine Bewegung des Greifers des Transfers, nicht in Echtzeit simuliert werden.

Wiederum kann mit dem anhand von den Figuren 2A und 2B erläuterten Verschieben der Teilsimulation mit Echtzeitanforderung in die echtzeitfähige Simulationsumgebung auf vorteilhafte Weise die aufwändige Echtzeitsimulation auf die notwendigen Anlagenkomponenten beschränkt werden.

Ein Simulationsergebnis der anhand des zweiten Ausführungsbeispiels beschriebenen Simulation kann beispielsweise darin bestehen, dass Abstandspositionen des Transfers und des Stoessels zu einem in der Presse befindlichen Werkstück angegeben werden. Dieses Simulationsergebnis kann an eine weitere Simulationseinheit 30 weitergeleitet werden, welche beispielsweise Verformungen auf in der Presse befindliche Teile simuliert. Auch die weitere Simulationseinheit kann ihrerseits ein Ergebnis der durchgeführten Simulation ermitteln und dieses beispielsweise mittels einer weiteren Netzwerkverbindung 400' an ein HMI-Gerät 10' übermitteln. Auf dem HMI-Gerät 10' kann beispielsweise ein laut Simulation an einem Werkstück aufgetretener Schaden im Falle des simulierten Stoppvorganges grafisch dargestellt werden.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Computerimplementiertes Verfahren zur Simulation eines Prozesses einer industriellen Steuerungsanlage in einer Simulationseinheit (11),
wobei die Simulationseinheit (11) eine echtzeitfähige Simulationsumgebung (101) und eine nicht-echtzeitfähige Simulationsumgebung (102) aufweist, welche über einen gemeinsamen Speicherbereich (100) Daten austauschen können,
wobei der zu simulierende Prozess in mindestens zwei Zeitscheiben (1, 2) unterteilt ist, wobei mindestens eine der mindestens zwei Zeitscheiben (1) als in der echtzeitfähigen Simulationsumgebung (101) durch die Simulation zu bearbeiten festgelegt ist,
wobei die mindestens eine in der echtzeitfähigen Simulationsumgebung (101) zu bearbeitende Zeitscheibe (1) durch die Simulationseinheit (11) zur Bearbeitung in die echtzeitfähige Simulationsumgebung (101) verschoben wird,
wobei ein Simulationsergebnis der Simulation bereitgestellt wird zur Übertragung an mindestens eine datenverarbeitende Einheit, insbesondere eine Steuerungseinheit (20) der industriellen Steuerungsanlage und/oder eine weitere Simulationsumgebung (30) der industriellen Steuerungsanlage und/oder einen Industrie-PC (10) oder HMI-Gerät (10') zur Überwachung der industriellen Steuerungsanlage, insbesondere zur Überwachung einer virtuellen Inbetriebnahme.

2. Computerimplementiertes Verfahren nach Anspruch 1, wobei das Simulationsergebnis aus in der echtzeitfähigen Simulationsumgebung (101) und in der nicht-echtzeitfähigen Simulationsumgebung (102) bearbeiteten Anteilen zusammengesetzt wird.

3. Computerimplementiertes Verfahren nach Anspruch 1 oder 2, wobei die echtzeitfähige Simulationsumgebung (101) und die nicht-echtzeitfähige Simulationsumgebung (102) auf einer Recheneinheit der Simulationseinheit (11) ausgeführt werden und Ressourcen der Recheneinheit mittels eines Hypervisors auf die echtzeitfähige Simulationsumgebung (101) und die nicht-echtzeitfähige Simulationsumgebung (102) aufgeteilt werden.

4. Computerimplementiertes Verfahren nach einem der vorstehenden Ansprüche, wobei die Simulation des Prozesses durch ein in mindestens zwei Teilmodelle unterteiltes Simulationsmodell abgebildet wird und die mindestens zwei Teilmodelle in jeweils einer der mindestens zwei Zeitscheiben (1, 2) durch die Simulationseinheit (11) bearbeitet werden.

5. Computerimplementiertes Verfahren nach einem der vorstehenden Ansprüche, wobei die mindestens zwei Teilmodelle durch das Festlegen der zugehörigen Zeitscheibe (1, 2) als in der echtzeitfähigen Simulationsumgebung (101) zu bearbeitende Zeitscheibe (1, 2) unbeeinflusst bleiben.

6. Computerimplementiertes Verfahren nach einem der vorstehenden Ansprüche, wobei die mindestens zwei Teilmodelle durch das Verschieben der zugehörigen Zeitscheibe (1, 2) in die echtzeitfähige Simulationsumgebung (101) unbeeinflusst bleiben.

7. Computerimplementiertes Verfahren nach einem der vorstehenden Ansprüche, wobei die nicht-echtzeitfähige Simulationsumgebung (102) als Managementsystem der Simulationseinheit in verschiedenen Zeitscheiben (1, 2) erstellte Teilsimulationen synchronisiert.

8. Computerimplementiertes Verfahren nach einem der vorstehenden Ansprüche, wobei eine zwischen der Simulationseinheit (11) und der datenverarbeitenden Einheit vorgesehene Kopplungsschnittstelle einen Signalaustausch (200) zwischen Simulationseinheit (11) und datenverarbeitender Einheit (10) durchführt.

9. Computerimplementiertes Verfahren zum Einrichten einer Simulation eines Prozesses in einer industriellen Steuerungsanlage, wobei das Einrichten in einem Engineeringprogramm der Simulationseinheit erfolgt,
wobei die Simulation eine echtzeitfähige Simulationsumgebung (101) und eine nicht-echtzeitfähige Simulationsumgebung (102) aufweist, welche über einen gemeinsamen Speicherbereich (100) Daten austauschen können,
wobei mindestens zwei Zeitscheiben (1, 2) des zu simulierenden Prozesses festgelegt werden, wobei für mindestens eine der mindestens zwei Zeitscheiben (1, 2) wählbar festgelegt wird, ob sie durch die Simulation in der echtzeitfähigen Simulationsumgebung (101) oder der nicht-echtzeitfähigen Simulationsumgebung (102) bearbeitet wird.

10. Computerimplementiertes Verfahren nach Anspruch 9, wobei das Einrichten ferner das Zuweisen von mindestens zwei Teilmodellen eines Simulationsmodells des Prozesses umfasst, wobei jedes der mindestens zwei Teilmodelle zu jeweils einer der mindestens zwei Zeitscheiben (1, 2) oder mehreren Zeitscheiben innerhalb der echtzeitfähigen oder der nicht-echtzeitfähigen Simulationsumgebungen zugeordnet wird.

11. Computerprogrammprodukt mit einem Computerprogramm, das Mittel zur Durchführung des computerimplementierten Verfahrens nach einem der Ansprüche 1 bis 10 aufweist, wenn das Computerprogramm auf einer programmgesteuerten Einrichtung zur Ausführung gebracht wird.

12. Simulationseinheit (11) ausgebildet zur Simulation eines Prozesses einer industriellen Steuerungsanlage,
aufweisend:
- eine nicht-echtzeitfähige Simulationsumgebung (102) und eine echtzeitfähige Simulationsumgebung (101),
- einen gemeinsamen Speicherbereich (100) mit Zugriff durch die nicht-echtzeitfähige Simulationsumgebung (102) sowie durch die echtzeitfähige Simulationsumgebung (101),
- eine Kopplungsschnittstelle zu einer datenverarbeitenden Einheit, insbesondere einer Steuerungseinheit (10) der industriellen Steuerungsanlage und/oder einer weiteren Simulationsumgebung der industriellen Steuerungsanlage und/oder einem Industrie-PC oder HMI-Gerät zur Überwachung der industriellen Steuerungsanlage, insbesondere zur Überwachung einer virtuellen Inbetriebnahme.

13. Simulationseinheit nach Anspruch 12, wobei die Simulationseinheit geeignet ist zum Ausführen eines Computerprogrammproduktes nach Anspruch 11.
